# EUROPÄISCHE PATENTSCHRIFT

(11) **EP 2 009 202 B1**
(45) Veröffentlichungstag und Bekanntmachung des Hinweises auf die Patenterteilung: **27.04.2011**
(21) Anmeldenummer: 07022334.2
(22) Anmeldetag: 17.11.2007
(51) Int. Cl.: E04H 12/16, F03D 11/04

(54) **Windenergieanlagenturm**
Wind farm tower
Tour d'énergie éolienne

(30) Priorität: 28.06.2007 DE 102007031065
(43) Veröffentlichungstag der Anmeldung: 31.12.2008
(73) Patentinhaber: Nordex Energy GmbH, 22848 Norderstedt (DE)
(72) Erfinder: Jakubowski, Alexander, Dr.-Ing., 46236 Bottrop (DE); Nitzpon, Joachim, 20255 Hamburg (DE)
(74) Vertreter: Schildberg, Peter

(56) Entgegenhaltungen:
- EP-A- 1 654 460
- DE-A1- 10 126 912
- DE-B3- 10 230 273
- DE-U1-202005 010 398
- DE-U1-202006 009 554

## Beschreibung

Die Erfindung betrifft einen Windenergieanlagenturm mit einem Turmabschnitt aus einem Betonwerkstoff und einer röhrenförmien Turmsektion aus Stahl, die an ihrem Fuß eine Vielzahl von Verbindungsbohrungen zur Verbindung mit dem Turmabschnitt aus dem Betonwerkstoff aufweist.

Windenergieanlagentürme werden häufig mit Ausnahme eines Fundaments ganz aus Stahl hergestellt. Mit zunehmender Größe der Windenergieanlagentürme ist für eine ausreichende Stabilität jedoch ein sehr großer Durchmesser des Turms, insbesondere im unteren Bereich, erforderlich. Ab einem bestimmten Durchmesser kommt es zu erheblichen Schwierigkeiten bei der Fertigung und beim Transport der Turmsektionen. Dies führt zu einem hohen logistischen Aufwand und zu hohen Kosten.

Diese Schwierigkeiten können dadurch vermieden werden, daß ein unterer Turmabschnitt aus einem Betonwerkstoff hergestellt wird. Dieser kann aus vorgefertigten Teilen bestehen und auf der Baustelle zusammengefügt werden oder vollständig auf der Baustelle durch Gießen hergestellt werden. Auf diesen Turmabschnitt aus Beton wird ein weiterer Turmabschnitt aus Stahl aufgesetzt, der aus einer oder mehreren röhrenförmigen Turmsektionen bestehen kann. Besonderes Augenmerk gilt der Verbindung des Turmabschnitts aus Beton mit dem unteren Ende des Turmabschnitts aus Stahl. Für diese Verbindung sind aus dem Stand der Technik unterschiedliche Lösungen bekannt.

In der aus der Druckschrift EP 1 654 460 B1 bekannten Variante wird ein unterer Abschnitt der am unteren Ende des Turmabschnitts aus Stahl angeordneten röhrenförmigen Turmsektion beim Gießen des Turmabschnitts aus Beton in einem Einbettungsbereich der Wand des Turmabschnitts aus Beton eingegossen. Spezielle Verankerungselemente sind fest mit der Turmsektion aus Stahl verbunden und sollen die Festigkeit der Verbindung zwischen Beton und Stahl verbessern.

In der Druckschrift DE 20 2006 009 554 U1 wird vorgeschlagen, ein spezielles Adapterelement aus Stahl zu verwenden, das mit dem Turmabschnitt aus Beton vergossen wird. Dabei ist das Adapterelement im Wesentlichen ringförmig ausgeführt und umschließt das obere Ende des Turmabschnitts aus Beton. An der Oberseite des Adapterelements wird eine röhrenförmige Turmsektion aus Stahl über eine Flanschverbindung befestigt.

Aus der Druckschrift DE 102 30 273 B3 ist ebenfalls die Verwendung eines Adapterelements bekannt. Dieses ist ebenfalls ringförmig und wird an seinem oberen Ende über eine Flanschverbindung mit einer röhrenförmigen Turmsektion aus Stahl verbunden. Der unterhalb des Adapters angeordnete Turmabschnitt besteht aus Spannbeton, wobei Spannglieder im Inneren der Wandung des unteren Turmabschnitts verlaufen und durch Verbindungsbohrungen des Adapterelements hindurchgeführt sind. Oberhalb des Adapterelements sind die Spannglieder verankert, so daß sie das Adapterelement fest mit dem Turmabschnitt aus Beton verspannen.

Eine ähnliche Lösung ist aus der Druckschrift DE 101 26 912 A1 bekannt, wobei hier entweder ein separates Adapterelement aus Stahl oder eine entsprechend ausgestaltete unterste Turmsektion aus Stahl mit den Spanngliedern des Turmabschnitts aus Beton verspannt wird. Als Besonderheit sind die Spannglieder innerhalb des röhrenförmig ausgebildeten Turmabschnitts aus Beton angeordnet.

Allen beschriebenen Ausführungen ist gemeinsam, daß die Turmsektion aus Stahl oder ein gesondertes Adapterelement mit dem Turmabschnitt aus Beton vergossen oder mit den Spanngliedern für den Turmabschnitt aus Beton verspannt wird.

Davon ausgehend ist es die Aufgabe der Erfindung, einen Windenergieanlagenturm zur Verfügung zu stellen, der einfacher und kostengünstiger errichtet, gewartet und gegebenenfalls repariert werden kann, sowie ein Verfahren zur Errichtung eines derartigen Turms.

Diese Aufgabe wird gelöst durch den Windenergieanlagenturm mit den Merkmalen des Anspruchs 1. Vorteilhafte Ausgestaltungen sind in den sich anschließenden Unteransprüchen angegeben.

Der erfindungsgemäße Windenergieanlagenturm hat einen Turmabschnitt aus einem Betonwerkstoff und eine röhrenförmige Turmsektion aus Stahl, die an ihrem Fuß eine Vielzahl von Verbindungsbohrungen zur Verbindung mit dem Turmabschnitt aus dem Betonwerkstoff aufweist, wobei der Turmabschnitt aus dem Betonwerkstoff einen Kopfabschnitt mit einer Vielzahl von Öffnungen aufweist und eine Vielzahl von Ankerbolzen vorgesehen sind, die nach Fertigstellung des Turmabschnitts aus dem Betonwerkstoff jeweils in oder an einer der Verbindungsbohrungen am Fuß der Turmsektion aus Stahl und einer der Öffnungen im Kopfabschnitt festlegbar sind.

Der Turmabschnitt aus einem Betonwerkstoff kann aus einem beliebigen Betonwerkstoff, beispielsweise Stahlbeton oder Spannbeton, bestehen. Er kann aus mehreren vorgefertigten Abschnitten zusammengefügt oder auf der Baustelle gegossen sein. Die röhrenförmige Turmsektion aus Stahl kann den oberen Teil des Windenergieanlagenturms bilden und bis zu einem Lager für die Gondel der Windenergieanlage hinaufreichen. Sie kann jedoch auch nur den untersten Teil eines Turmabschnitts aus Stahl bilden, der weitere stählerne Turmsektionen aufweist. Die röhrenförmige Turmsektion aus Stahl kann einen beliebigen Querschnitt aufweisen und abschnittsweise oder vollständig zylindrisch oder konisch geformt sein.

Der Kopfabschnitt besteht ebenfalls aus einem Betonwerkstoff und ist bevorzugt integral mit dem Turmabschnitt aus dem Betonwerkstoff ausgebildet. Die Öffnungen im Kopfabschnitt dienen zur Aufnahme von Ankerbolzen, die die Verbindung zur röhrenförmigen Turmsektion aus Stahl herstellen.

Die Ankerbolzen sind in oder an den Verbindungsbohrungen am Fuß der Turmsektion aus Stahl und in oder an den Öffnungen im Kopfabschnitt festlegbar. Zu diesem Zweck können Sie in entsprechende Gegengewinde in den Verbindungsbohrungen am Fuß der Turmsektion aus Stahl eingeschraubt oder durch diese Verbindungsbohrungen hindurchgeführt und mit einer Mutter gesichert werden. Die Ankerbolzen können an einem oder an beiden Enden ein Gewinde aufweisen.

Die Ankerbolzen sind nach Fertigstellung des Turmabschnitts aus dem Betonwerkstoff festlegbar, d.h. die Verbindung zur röhrenförmigen Turmsektion aus Stahl braucht erst dann hergestellt zu werden, wenn der Turmabschnitt aus dem Betonwerkstoff bereits fertiggestellt ist. Fertiggestellt bedeutet in diesem Zusammenhang, daß der Turmabschnitt aus dem Betonwerkstoff seine endgültige Festigkeit und Tragfähigkeit erreicht hat, insbesondere daß der Betonwerkstoff ausgehärtet ist und er gegebenenfalls mittels geeigneter Spannglieder mit einer Vorspannung beaufschlagt worden ist. Somit wird durch die Erfindung die Herstellung des Turmabschnitts aus Beton vollständig von der Verbindung mit der Turmsektion aus Stahl entkoppelt. Dies hat bei der Errichtung des Windenergieanlagenturms zur Folge, daß die Arbeiten am Turmabschnitt aus dem Betonwerkstoff unabhängig von der Verfügbarkeit der Turmsektion aus Stahl oder eines separaten Adapterelements abgeschlossen werden können. Die mit der Errichtung des Turmabschnitts aus dem Betonwerkstoff betrauten Fachleute können ihre Arbeit daher zügig abschließen und die Herstellung und Anlieferung der stählernen Turmkomponenten kann ggfs. zu einem späteren Zeitpunkt erfolgen.

Ein weiterer Vorteil gegenüber einer Konstruktion mit einem vergossenen Adapterelement ist, daß auf dieses kostenintensive Bauteil gänzlich verzichtet werden kann.

Gegenüber den aus dem Stand der Technik bekannten Varianten ist hervorzuheben, daß bei der Erfindung die röhrenförmige Turmsektion aus Stahl von dem Turmabschnitt aus dem Betonwerkstoff gegebenenfalls gelöst werden kann, ohne die Stabilität oder Integrität des Turmabschnitts aus dem Betonwerkstoff zu beeinträchtigen. Insbesondere können einzelne Ankerbolzen problemlos ausgetauscht werden, beispielsweise wenn dies korrosionsbedingt erforderlich ist.

Die Festlegung der Ankerbolzen in den Öffnungen im Kopfabschnitt kann ebenfalls auf beliebige Weise erfolgen. In einer bevorzugten Ausgestaltung sind die Ankerbolzen durch jeweils eine Öffnung im Kopfabschnitt hindurchführbar und auf einer von der Turmsektion aus Stahl abgewandten Seite der Öffnung verankerbar. In diesem Fall handelt es sich bei den Öffnungen im Kopfabschnitt um Durchgangsöffnungen. Die Verankerung der Ankerbolzen auf der von der Turmsektion aus Stahl abgewandten Seite der Öffnung kann beispielsweise durch eine Mutter oder einen entsprechenden Kopf des Ankerbolzens bewirkt werden.

Gemäß einer Ausgestaltung ist an den von der Turmsektion aus Stahl abgewandten Enden der Öffnungen im Kopfabschnitt mindestens eine Ankerplatte angeordnet. Die Ankerplatte kann ring- oder scheibenförmig sein und aus einem oder mehreren Segmenten bestehen. Die Ankerplatte kann mit dem Kopfabschnitt vergossen sein oder nach dem Gießen angesetzt werden. Die Ankerplatte weist zu den Öffnungen im Kopfabschnitt korrespondierende Bohrungen auf, in die die Ankerbolzen einsetzbar oder durch die die Ankerbolzen hindurchführbar sind. Die Bohrungen können insbesondere kreisrunde Bohrungen sein. Mit Hilfe einer derartigen Ankerplatte kann eine besonders belastbare Verankerung der Ankerbolzen am Kopfabschnitt erreicht werden.

In einer Ausgestaltung weisen die Öffnungen im Kopfabschnitt Hüllrohre auf, die mit dem Betonwerkstoff vergossen sind. Dabei legen die Hüllrohre auf einfache Weise die Anordnung und Form der Öffnungen im Kopfabschnitt beim Gießen des Kopfabschnitts fest. Es werden somit auf einfache Weise präzise angeordnete und belastbare Öffnungen zur Verfügung gestellt.

In einer Ausgestaltung ist an einer Oberseite des Kopfabschnitts ein Lastverteilblech angeordnet. Das Lastverteilblech besteht bevorzugt aus Stahl und hat eine scheiben- oder ringförmige Gestalt. Es kann aus mehreren Segmenten bestehen. Das Lastverteilblech kann mit dem Kopfabschnitt vergossen werden oder nach Fertigstellung des Turmabschnitts aus Beton aufgesetzt werden. Das Lastverteilblech stellt eine ebene Kontaktfläche für den Fuß der Turmsektion aus Stahl zur Verfügung und verteilt die auftretenden Lasten auf eine größere Fläche des Kopfabschnitts. Es weist Bohrungen für die Ankerbolzen auf, die insbesondere als kreisrunde, schräg gebohrte Löcher oder als gerade gebohrte Langlöcher ausgeführt sein können.

Gemäß einer Ausgestaltung sind die Öffnungen im Kopfabschnitt zylindrisch und laufen in Richtung ihrer von der Turmsektion aus Stahl abgewandten Enden auf die Längsachse des Turmabschnitts aus dem Betonwerkstoff zu. Bei dieser gegenüber der Längsachse des Turmabschnitts aus dem Betonwerkstoff verkippten Ausrichtung der Öffnungen im Kopfabschnitt ist deren von der Turmsektion aus Stahl abgewandtes Ende leicht zugänglich. Insbesondere können diese Enden auch bei einer großen Wandstärke des Turmabschnitts aus dem Betonwerkstoff von innen zugänglich sein. Gleichzeitig können die der Turmsektion aus Stahl zugewandten Enden der Öffnungen nahe am äußeren Umfang des Kopfabschnitts angeordnet sein. Dadurch kann eine höhere Festigkeit der Verbindung bei gleichzeitig guter Zugänglichkeit zu den Ankerbolzen erreicht werden.

Gemäß einer Ausgestaltung sind die Verbindungsbohrungen im Fuß der Turmsektion aus Stahl in einem Flansch angeordnet, der von einer Wandung der Turmsektion aus Stahl radial nach innen vorsteht. Im Gegensatz zu einem nach außen gewandten Flansch kann bei dieser Anordnung ein bündiger Abschluß der Außenwand der Turmsektion aus Stahl mit der Außenwand des Turmabschnitts aus dem Betonwerkstoff erreicht werden. Zudem sind die Ankerbolzen vollständig im Inneren des Turms angeordnet und somit leicht zugänglich und vor Korrosion geschützt. Die Verbindungsbohrungen können insbesondere als schräg gebohrte, kreisrunde Löcher oder als gerade gebohrte Langlöcher in dem Flansch ausgeführt sein. Bei schräg durch den Flansch hindurchgeführten Ankerbolzen kann oberhalb des Flansches eine keilförmige Unterlegscheibe angeordnet werden.

In einer Ausgestaltung weist der Turmabschnitt aus dem Betonwerkstoff mehrere Spannglieder auf, die den Turmabschnitt aus dem Betonwerkstoff vorspannen. In dieser Ausgestaltung wird der Beton in der bei Spannbeton üblichen Weise von Zugspannungen entlastet.

Bevorzugt sind die Spannglieder im Bereich des Kopfabschnitts gegenüber den Öffnungen im Kopfabschnitt in radialer Richtung versetzt angeordnet. Dadurch sind die Spannglieder leicht zugänglich und werden nicht von einem Flansch der Turmsektion aus Stahl verdeckt.

In einer Ausgestaltung weist der Kopfabschnitt einen von der Innenseite einer Wandung des Turmabschnitts aus dem Betonwerkstoff radial nach innen vorstehenden Abschnitt auf und die Öffnungen im Kopfabschnitt führen von einer oberen Fläche des Kopfabschnitts zu einer unteren Fläche des vorstehenden Abschnitts. Der vorstehende Abschnitt kann ringförmig um den gesamten inneren Umfang des Turmabschnitts aus dem Betonwerkstoff umlaufend oder segmentweise ausgeführt sein. Der nach innen vorstehende Abschnitt erlaubt eine gut zugängliche und sichere Verankerung der Ankerbolzen. Insbesondere können die Öffnungen so angeordnet sein, daß die Turmwand des Turmabschnitts aus dem Betonwerkstoff nicht durch die Öffnungen beeinträchtigt wird.

Bevorzugt sind die Öffnungen im Kopfabschnitt senkrecht zu der unteren Fläche des vorstehenden Abschnitts ausgerichtet. Die an dieser unteren Fläche verankerten Ankerbolzen üben dadurch eine gleichmäßige Belastung auf den Betonwerkstoff des Kopfabschnittes aus.

In einer Ausgestaltung verlaufen die Spannglieder durch den radial nach innen vorstehenden Abschnitt des Kopfabschnitts. Der nach innen vorstehende Abschnitt des Kopfabschnitts bietet eine sichere Verankerungsmöglichkeit für die Spannglieder. Diese sind in dieser Anordnung zudem von innen leicht zugänglich. Die Spannglieder können im weiteren Verlauf beispielsweise abschnittsweise oder vollständig innerhalb einer Wandung des Turmabschnitts aus dem Betonwerkstoff angeordnet sein oder im Inneren eines röhrenförmig ausgebildeten Turmabschnitts aus dem Betonwerkstoff gespannt sein.

Gemäß einer Ausgestaltung sind die Spannglieder auf der Oberseite des Kopfabschnitts und im Bereich des unteren Endes des Turmabschnitts aus dem Betonwerkstoff fixiert. Gegebenenfalls kann die Fixierung im Bereich des unteren Endes des Turmabschnitts aus dem Betonwerkstoff auch in einem Fundament des Windenergieanlagenturms erfolgen, das bevorzugt ebenfalls aus einem Betonwerkstoff besteht.

Die obige Aufgabe wird ebenfalls gelöst durch das Verfahren mit den Merkmalen des Anspruchs 14. Vorteilhafte Ausgestaltungen des Verfahrens sind in den sich anschließenden Unteransprüchen angegeben.

Das erfindungsgemäße Verfahren dient zur Errichtung eines Windenergieanlagenturms, der einen Turmabschnitt aus einem Betonwerkstoff und eine röhrenförmige Turmsektion aus Stahl aufweist, die an ihrem Fuß mit einer Vielzahl von Verbindungsbohrungen zur Verbindung mit dem Turmabschnitt aus dem Betonwerkstoff versehen ist, wobei in einem ersten Schritt der Turmabschnitt aus dem Betonwerkstoff, der einen Kopfabschnitt mit einer Vielzahl von Öffnungen aufweist, fertig gestellt wird und in einem zweiten Schritt die Turmsektion aus Stahl mit dem Turmabschnitt aus dem Betonwerkstoff verbunden wird, wobei eine Vielzahl von Ankerbolzen vorgesehen sind, die jeweils in oder an einer der Verbindungsbohrungen am Fuß der Turmsektion aus Stahl und einer der Öffnungen im Kopfabschnitt festgelegt werden.

Das Verfahren vereinfacht die Errichtung eines Windenergieanlagenturms, weil der Turmabschnitt aus einem Betonwerkstoff fertig gestellt werden kann, bevor Elemente für einen Turmabschnitt aus Stahl benötigt werden. Außerdem ist das Montieren der Turmsektion aus Stahl mit Hilfe der Ankerbolzen wesentlich einfacher, als etwa ein gesondertes Adapterelement während der Herstellung des Turmabschnitts aus dem Betonwerkstoff zu vergießen. Weitere Vorteile des Verfahrens sind bei der Beschreibung des zu errichtenden Windenergieanlagenturm bereits erläutert worden.

Die Erfindung wird nachfolgend anhand eines in zwei Figuren dargestellten Ausführungsbeispiels näher erläutert. Es zeigen:
- Fig. 1: eine Windenergieanlage in einer stark vereinfachten, schematischen Ansicht,
- Fig. 2: einen Querschnitt im Bereich der Verbindungsstelle zwischen einem Turmabschnitt aus einem Betonwerkstoff und einer Turmsektion aus Stahl in einer radial und entlang der Längsachse des Turms der Windenergieanlage aus Figur 1 verlaufenden Ebene.

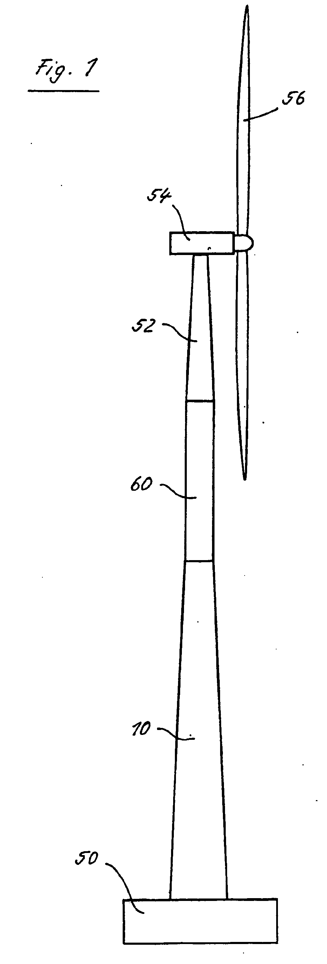

Die in Figur 1 dargestellte Windenergieanlage weist einen Turmabschnitt 10 aus Stahlbeton auf, der auf einem Betonfundament 50 ruht. Oberhalb des Turmabschnitts 10 befindet sich eine röhrenförmige Turmsektion 60 aus Stahl, die kreiszylindrisch geformt ist. Eine weitere Turmsektion 52 aus Stahl ist konisch und oberhalb der Turmsektion 60 angeordnet. Sie weist an ihrem oberen Ende ein Lager für die Gondel 54 der Windenergieanlage auf. An der Gondel 54 ist ein Rotor 56 mit mehreren Rotorblättern drehbar gelagert. Dieser treibt einen Generator zur Bereitstellung von elektrischer Energie an.

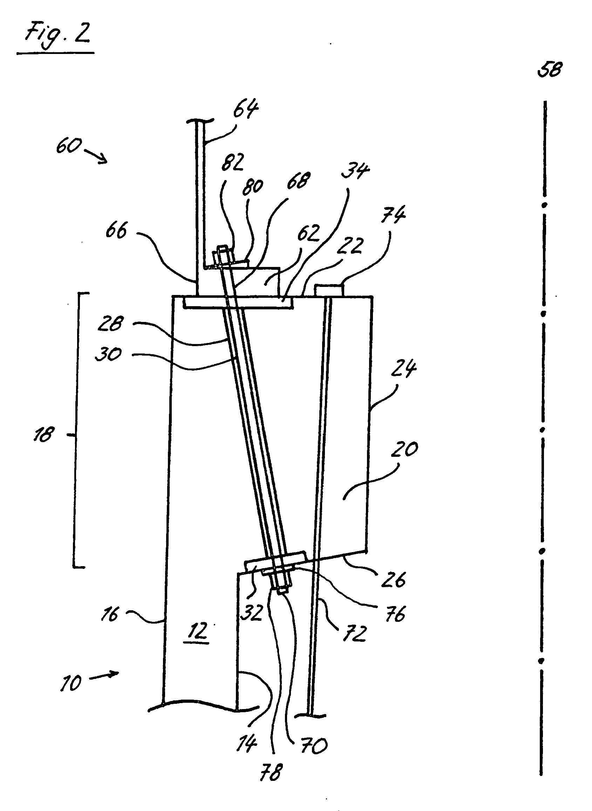

Die Querschnittsdarstellung der Figur 2 zeigt einen Ausschnitt der Verbindungsstelle zwischen der Turmsektion 60 aus Stahl und dem Turmabschnitt 10 aus dem Betonwerkstoff. Die Längsachse des Turms ist bei 58 strichpunktiert angedeutet; dementsprechend befindet sich die Außenseite des Turms auf der linken Seite der Figur 2. Turmabschnitt 10 und Turmsektion 60 sind rotationssymmetrisch bezüglich der Längsachse 58.

Der Turmabschnitt 10 aus dem Betonwerkstoff weist eine Wandung 12 auf, die sich nach unten im Wesentlichen bis zum Fundament 50 erstreckt. Die Wandung 12 hat eine Innenseite 14 und eine Außenseite 16. Das obere Ende des Turmabschnitts 10 aus dem Betonwerkstoff wird von dem Kopfabschnitt 18 gebildet, der integral mit der Wandung 12 aus demselben Betonwerkstoff hergestellt ist. Der Kopfabschnitt 18 ist ringförmig ausgebildet und hat eine obere Fläche 22, die den Turmabschnitt 10 nach oben begrenzt, eine kreiszylindrische Öffnung 24 zur Innenseite des Turms hin und eine untere Fläche 26, die gegenüber der oberen Fläche 22 derart geneigt ist, daß die Dicke des Kopfabschnitts 18 in radialer Richtung nach innen abnimmt.

In den Kopfabschnitt 18 einbetoniert ist eine Vielzahl von Hüllrohren 28, von denen in der Querschnittsdarstellung der Figur 2 eines mit seiner Längsachse in der Schnittebene liegt. Weitere, in der Figur 2 nicht sichtbare Hüllrohre 28, sind in regelmäßigen Abständen entlang des Umfangs des Kopfabschnitts 18 angeordnet. Jedes Hüllrohr 28 umrandet eine Öffnung 30 im Kopfabschnitt 18. Die von der Turmsektion 60 aus Stahl abgewandten Enden der Öffnungen 30 münden in entsprechende Bohrungen einer Ankerplatte 32, die einen konischen Ring bildet, der etwa bündig mit der unteren Fläche 26 des Kopfabschnitts 18 abschließt. Die Ankerplatte 32 ist mit dem Kopfabschnitt 18 vergossen.

Ebenfalls mit dem Kopfabschnitt 18 vergossen ist ein Lastverteilblech 34, das ebenfalls ringförmig ausgebildet ist und eine Vielzahl von kreisrunden, schräg ausgerichteten Bohrungen aufweist, deren Anordnung derjenigen der der Turmsektion 60 aus Stahl zugewandten Enden der Öffnungen 30 im Kopfabschnitt 18 entspricht.

Die obere Fläche des ringförmigen Lastverteilblechs 34 schließt etwa bündig mit der oberen Fläche 22 des Kopfabschnitts 18 ab und grenzt unmittelbar an einen Flansch 62, der von der Wandung 64 der Turmsektion 60 aus Stahl radial nach innen vorsteht. Die Außenseite 66 des Flansches 62 schließt bündig mit der Außenseite der Wandung 64 ab. Die Breite des Flansches 62 ist geringer als die Breite des Lastverteilblechs 34, so daß das Lastverteilblech 34 die über den Flansch 62 in den Kopfabschnitt 18 eingeleiteten Kräfte auf eine größere Fläche verteilt. Weiterhin weist der Flansch 62 eine Vielzahl von kreisrunden, schräg angeordneten Verbindungsbohrungen 68 auf, deren Anordnung und Ausrichtung derjenigen der Öffnungen 30 im Kopfabschnitt 18 entspricht.

Ankerbolzen 70 dienen der Verbindung von Turmsektion 60 aus Stahl und Turmabschnitt 10 aus dem Betonwerkstoff. Jeder Ankerbolzen 70 erstreckt sich durch eine Verbindungsbohrung 68 im Flansch 62, eine Bohrung im Lastverteilblech 34, eine Öffnung 30 im Kopfabschnitt 18, die von einem Hüllrohr 28 umgeben ist, und eine Bohrung in der Ankerplatte 32. Die Längsachse der Öffnung 30 ist, ebenso wie die Längsachse des Ankerbolzens 70, senkrecht zur unteren Fläche 26 des Kopfabschnitts 18 ausgerichtet. Unterhalb der Ankerplatte 32 ist der Ankerbolzen 70 mit einer Unterlegscheibe 76 und einer Mutter 78 verankert. Durch die senkrechte Ausrichtung liegen Unterlegscheibe 76 und Mutter 78 flächig an der Ankerplatte 32 an und sorgen somit für eine sichere Verankerung des Ankerbolzens 70 in der Öffnung 30. Das andere Ende des Bolzens 70 ist oberhalb des Flansches 62 mit einer keilförmig ausgebildeten Unterlegscheibe 80 und einer weiteren Mutter 82 gesichert.

Um den Turmabschnitt 10 aus dem Betonwerkstoff mit einer Vorspannung zu beaufschlagen, sind mehrere Spannglieder 72 vorhanden. Jedes Spannglied 72 verläuft durch den radial nach innen vorstehenden Abschnitt 20 des Kopfabschnitts 18 und ist gegenüber den Öffnungen 30 nach innen versetzt angeordnet. An der oberen Fläche 22 des Kopfabschnitts 18 sind die Spannglieder 72 mit einer Befestigungs- oder Spanneinrichtung 74 gesichert bzw. gespannt. Die Spannglieder 72 verlaufen nach unten bis zum Fuß des Turmabschnitts 10 aus dem Betonwerkstoff, wo sie sicher verankert sind. Sie spannen somit im Wesentlichen den gesamten Turmabschnitt 10 aus dem Betonwerkstoff vor.

Der Turm kann mit dem erfindungsgemäßen Verfahren wie folgt errichtet werden. Nach Fertigstellung des Fundaments 50 wird in einem ersten Schritt der Turmabschnitt 10 aus dem Betonwerkstoff errichtet. Dabei wird die Wandung 12 und der Kopfabschnitt 18 durch Vergießen einer nicht dargestellten Stahlarmierung mit Beton hergestellt. Dabei werden auch die Hüllrohre 28, die Ankerplatte 32 und das Lastverteilblech 34 sowie die oberen Enden der Spannglieder 72 bzw. für die Aufnahme der Spannglieder 72 geeignete weitere Hüllrohre vergossen. Nach dem Aushärten des Betons werden die Spannglieder 72 gespannt, so daß der Turmabschnitt 10 aus dem Betonwerkstoff planmäßig vorgespannt ist und seine endgültige Stabilität erreicht hat. Damit ist der Turmabschnitt 10 aus dem Betonwerkstoff fertig gestellt. Zu einem späteren Zeitpunkt wird die Turmsektion 60 aus Stahl auf das Lastverteilblech 34 aufgesetzt und mittels der Ankerbolzen 70 fest mit dem Kopfabschnitt 18 verschraubt.

## Patentansprüche

1. Windenergieanlagenturm mit einem Turmabschnitt (10) aus einem Betonwerkstoff und einer röhrenförmigen Turmsektion (60) aus Stahl, die an ihrem Fuß eine Vielzahl von Verbindungsbohrungen (68) zur Verbindung mit dem Turmabschnitt (10) aus dem Betonwerkstoff aufweist, **dadurch gekennzeichnet, daß** der Turmabschnitt (10) aus dem Betonwerkstoff einen Kopfabschnitt (18) mit einer Vielzahl von Öffnungen (30) aufweist und eine Vielzahl von Ankerbolzen (70) vorgesehen sind, die nach Fertigstellung des Turmabschnitts (10) aus dem Betonwerkstoff jeweils in oder an einer der Verbindungsbohrungen (68) am Fuß der Turmsektion (60) aus Stahl und einer der Öffnungen (30) im Kopfabschnitt (18) festlegbar sind.

2. Windenergieanlagenturm nach Anspruch 1, **dadurch gekennzeichnet, daß** die Ankerbolzen (70) durch jeweils eine Öffnung (30) im Kopfabschnitt (18) hindurchführbar und auf einer von der Turmsektion (60) aus Stahl abgewandten Seite der Öffnung (30) verankerbar sind.

3. Windenergieanlagenturm nach Anspruch 1 oder 2, **dadurch gekennzeichnet, daß** an den von der Turmsektion (60) aus Stahl abgewandten Enden der Öffnungen (30) im Kopfabschnitt (18) mindestens eine Ankerplatte (32) angeordnet ist.

4. Windenergieanlagenturm nach einem der Ansprüche 1 bis 3, **dadurch gekennzeichnet, daß** die Öffnungen (30) im Kopfabschnitt (18) Hüllrohre (28) aufweisen, die mit dem Betonwerkstoff vergossenen sind.

5. Windenergieanlagenturm nach einem der Ansprüche 1 bis 4, **dadurch gekennzeichnet, daß** an einer Oberseite (22) des Kopfabschnitts (18) ein Lastverteilblech (34) angeordnet ist.

6. Windenergieanlagenturm nach einem der Ansprüche 1 bis 5, **dadurch gekennzeichnet, daß** die Öffnungen (30) im Kopfabschnitt (18) zylindrisch sind und in Richtung ihrer von der Turmsektion (60) aus Stahl abgewandten Enden auf die Längsachse (58) des Turmabschnitts (10) aus dem Betonwerkstoff zulaufen.

7. Windenergieanlagenturm nach einem der Ansprüche 1 bis 6, **dadurch gekennzeichnet, daß** die Verbindungsbohrungen (68) im Fuß der Turmsektion (60) aus Stahl in einem Flansch (62) angeordnet sind, der von einer Wandung (64) der Turmsektion (60) aus Stahl radial nach innen vorsteht.

8. Windenergieanlagenturm nach einem der Ansprüche 1 bis 7, **dadurch gekennzeichnet, daß** der Turmabschnitt (10) aus dem Betonwerkstoff mehrere Spannglieder (72) aufweist, die den Turmabschnitt (10) aus dem Betonwerkstoff vorspannen.

9. Windenergieanlagenturm nach Anspruch 8, **dadurch gekennzeichnet, daß** die Spannglieder (72) im Bereich des Kopfabschnitts (18) gegenüber den Öffnungen (30) im Kopfabschnitt (18) in radialer Richtung versetzt angeordnet sind.

10. Windenergieanlagenturm nach einem der Ansprüche 1 bis 9, **dadurch gekennzeichnet, daß** der Kopfabschnitt (18) einen von der Innenseite (14) einer Wandung (12) des Turmabschnitts (10) aus dem Betonwerkstoff radial nach innen vorstehenden Abschnitt (20) aufweist und die Öffnungen (30) im Kopfabschnitt (18) von einer oberen Fläche (22) des Kopfabschnitts (18) zu einer unteren Fläche (26) des vorstehenden Abschnitts (20) führen.

11. Windenergieanlagenturm nach Anspruch 10, **dadurch gekennzeichnet, daß** die Öffnungen (30) im Kopfabschnitt (18) senkrecht zu der unteren Fläche (26) des vorstehenden Abschnitts (20) ausgerichtet sind.

12. Windenergieanlagenturm nach Anspruch 10 oder 11, **dadurch gekennzeichnet, daß** die Spannglieder (72) durch den radial nach innen vorstehenden Abschnitt (20) des Kopfabschnitts (18) verlaufen.

13. Windenergieanlagenturm nach einem der Ansprüche 8 bis 12, **dadurch gekennzeichnet, daß** die Spannglieder (72) auf der Oberseite des Kopfabschnitts (18) und im Bereich des unteren Endes des Turmabschnitts (10) aus dem Betonwerkstoff fixiert sind.

14. Verfahren zur Errichtung eines Windenergieanlagenturms, der einen Turmabschnitt (10) aus einem Betonwerkstoff und eine röhrenförmige Turmsektion (60) aus Stahl aufweist, die an ihrem Fuß mit einer Vielzahl von Verbindungsbohrungen (68) zur Verbindung mit dem Turmabschnitt (18) aus dem Betonwerkstoff versehen ist, **dadurch gekennzeichnet, dass** in einem ersten Schritt der Turmabschnitt (10) aus dem Betonwerkstoff, der einen Kopfabschnitt (18) mit einer Vielzahl von Öffnungen (30) aufweist, fertig gestellt wird und in einem zweiten Schritt die Turmsektion (60) aus Stahl mit dem Turmabschnitt (10) aus dem Betonwerkstoff verbunden wird, wobei eine Vielzahl von Ankerbolzen (70) vorgesehen sind, die jeweils in oder an einer der Verbindungsbohrungen (68) am Fuß der Turmsektion (60) aus Stahl und einer der Öffnungen (30) im Kopfabschnitt festgelegt werden.

15. Verfahren nach Anspruch 14, **dadurch gekennzeichnet, daß** die Ankerbolzen (70) im zweiten Schritt durch jeweils eine Öffnung (30) im Kopfabschnitt (18) hindurchgeführt und auf einer von der Turmsektion (60) aus Stahl abgewandten Seite der Öffnung (30) verankert werden.

16. Verfahren nach Anspruch 15, **dadurch gekennzeichnet, daß** an den von der Turmsektion (60) aus Stahl abgewandten Enden der Öffnungen (30) im Kopfabschnitt (18) mindestens eine Ankerplatte (32) angeordnet ist und die Ankerbolzen (70) im zweiten Schritt in oder an der Ankerplatte (32) verankert werden.

17. Verfahren nach einem der Ansprüche 14 bis 16, **dadurch gekennzeichnet, daß** im ersten Schritt Hüllrohre (28) mit dem Betonwerkstoff vergossen werden, die die Öffnungen (30) im Kopfabschnitt bilden.

18. Verfahren nach einem der Ansprüche 14 bis 17, **dadurch gekennzeichnet, daß** an der Oberseite (22) des Kopfabschnitts (18) ein Lastverteilblech (34) angeordnet wird.

19. Verfahren nach einem der Ansprüche 14 bis 18, **dadurch gekennzeichnet, daß** die Öffnungen (30) im Kopfabschnitt (18) zylindrisch sind und in Richtung ihrer von der Turmsektion (60) aus Stahl abgewandten Enden auf die Längsachse (58) des Turmabschnitts (10) aus dem Betonwerkstoff zulaufen.

20. Verfahren nach einem der Ansprüche 14 bis 19, **dadurch gekennzeichnet, daß** die Verbindungsbohrungen (68) im Fuß der Turmsektion (60) aus Stahl in einem Flansch (62) angeordnet sind, der von einer Wandung (64) der Turmsektion (60) aus Stahl radial nach innen vorsteht.

21. Verfahren nach einem der Ansprüche 14 bis 20, **dadurch gekennzeichnet, daß** der Turmabschnitt (10) aus dem Betonwerkstoff mehrere Spannglieder (72) aufweist, die im ersten Schritt gespannt werden, um den Turmabschnitt (10) aus dem Betonwerkstoff vorzuspannen.

22. Verfahren nach Anspruch 21, **dadurch gekennzeichnet, daß** die Spannglieder (72) im Bereich des Kopfabschnitts (18) gegenüber den Öffnungen (30) im Kopfabschnitt (18) in radialer Richtung versetzt angeordnet sind.

23. Verfahren nach einem der Ansprüche 14 bis 22, **dadurch gekennzeichnet, daß** der Kopfabschnitt (18) einen von der Innenseite (14) einer Wandung (12) des Turmabschnitts (10) aus dem Betonwerkstoff radial nach innen vorstehenden Abschnitt (20) aufweist und die Öffnungen (30) im Kopfabschnitt (18) von einer oberen Fläche (22) des Kopfabschnitts (18) zu einer unteren Fläche (26) des vorstehenden Abschnitts (20) führen und die Ankerbolzen (70) im zweiten Schritt durch die Öffnungen (30) geführt werden.

24. Verfahren nach Anspruch 23, **dadurch gekennzeichnet, daß** die Öffnungen (30) im Kopfabschnitt (18) senkrecht zu der unteren Fläche (26) des vorstehenden Abschnitts (20) ausgerichtet sind.

25. Verfahren nach Anspruch 23 oder 24, **dadurch gekennzeichnet, daß** die Spannglieder (72) durch den radial nach innen vorstehenden Abschnitt (20) des Kopfabschnitts (18) verlaufen.

26. Verfahren nach einem der Ansprüche 21 bis 25, **dadurch gekennzeichnet, daß** die Spannglieder (72) im ersten Schritt auf der Oberseite (22) des Kopfabschnitts (18) und im Bereich des unteren Endes des Turmabschnitts (10) aus dem Betonwerkstoff fixiert werden.

## Claims

1. A wind energy plant tower with a tower portion (10) made of a concrete material and a steel-made tubular tower segment (60), which has on its foot a plurality of connection bores (68) for the connection to the tower portion (10) made of the concrete material, **characterised in that** the tower portion (10) made of the concrete material has a head portion (18) with a plurality of openings (30) and that a plurality of anchor bolts (70) are provided, which can be fastened after the completion of the tower portion (10) made of the concrete material each at a time in or on one of the connection bores (68) on the foot of the steel-made tower segment (60) and one of the openings (30) in the head portion (18).

2. A wind energy plant tower according to claim 1, **characterised in that** the anchor bolts (70) can be lead through one opening (30) in the head portion (18) each at a time and can be anchored on a side of the opening (30) which is turned away from the steel-made tower segment (60).

3. A wind energy plant tower according to claim 1 or 2, **characterised in that** at least one anchoring plate (32) is arranged on those ends of the openings (30) in the head portion (18) which are turned away from the steel-made tower segment (60),

4. A wind energy plant tower according to any one of claims 1 to 3, **characterised in that** the openings (30) in the head portion (18) have cladding tubes (28), which are cast together with the concrete material.

5. A wind energy plant tower according to any one of claims I to 4, **characterised in that** on an upper side (22) of the head portion (18) there is arranged a load distribution plate (34).

6. A wind energy plant tower according to any one of claims 1 to 5, **characterised in that** the openings (30) in the head portion (18) are cylindrical and run towards the longitudinal axis (58) of the tower portion (10) made of the concrete material in the direction of those ends thereof which are turned away from the steel-made tower segment (60).

7. A wind energy plant tower according to any one of claims I to 6, **characterised in that** the connection bores (68) in the foot of the steel-made tower segment (60) are arranged in a flange (62), which radially projects towards the inside from a wall (64) of the steel-made tower segment (60).

8. A wind energy plant tower according to any one of claims 1 to 7, **characterised in that** the tower portion (10) made of the concrete material has plural prestressing elements (72), which prestress the tower portion (10) made of the concrete material.

9. A wind energy plant tower according to claim 8, **characterised in that** in the region of the head portion (18), the prestressing elements (72) are arranged offset in the radial direction with respect to the openings (30) in the head portion (18).

10. A wind energy plant tower according to any one of claims 1 to 9, **characterised in that** the head portion (18) has a portion (20), projecting radially towards the inside from the interior side (14) of a wall (12) of the tower portion (10) made of the concrete material, and the openings (30) in the head portion (18) lead from an upper surface (22) of the head portion (18) towards a lower surface (26) of the projecting portion (20).

11. A wind energy plant tower according to claim 10, **characterised in that** the openings (30) in the head portion (18) are aligned vertical to the lower surface (26) of the projecting portion (20).

12. A wind energy plant tower according to claim 10 or 11, **characterised in that** the prestressing elements (72) run through the portion (20) of the head portion (18) projecting radially towards the inside.

13. A wind energy plant tower according to any one of claims 8 to 12, **characterised in that** the prestressing elements (72) are fixed on the upper side of the head portion (18) and in the region of the lower end of the tower portion (10) made from the concrete material.

14. A method for erecting a wind energy plant tower, which has a tower portion (10) made of a concrete material and a steel-made tubular tower segment (60), which is provided on its foot with a plurality of connection bores (68) for the connection to the tower portion (10) made of the concrete material, **characterised in that** in a first step, the tower portion (10) made of the concrete material which has a head portion (18) with a plurality of openings (30) is completed, and in a second step, the steel-made tower segment (60) is connected with the tower portion (10) made of the concrete material, wherein a plurality of anchor bolts (70) are provided, which each at a time are fastened in or on one of the connection bores (68) on the foot of the steel-made tower segment (60) and one of the openings (30) in the head portion.

15. A method according to claim 14, **characterised in that** in the second step, the anchor bolts (70) are each lead through one opening (30) in the head portion (18) each at a time and are anchored on a side of the opening (30)which is turned away from the steel-made tower portion (60).

16. A method according to claim 15, **characterised in that** on those ends of the openings (30) in the head portion (18) which are turned away from the steel-made tower portion (60), at least one anchor plate (32) is arranged, and the anchor bolts (70) are anchored in or on the anchor plate (32) in the second step.

17. A method according to any one of claims 14 to 16, **characterised in that** in the first step, cladding tubes (28) are cast together with the concrete material, which form the openings (30) in the head portion.

18. A method according to any one of claims 14 to 17, **characterised in that** a load distribution plate (34) is arranged on the upper side (22) of the head portion (18).

19. A method according to any one of claims 14 to 18, **characterised in that** the openings (30) in the head portion (18) are cylindrical and run towards the longitudinal axis (58) of the tower portion (10) made of the concrete material in the direction of their ends which are turned away from the steel-made tower segment (60).

20. A method according to any one of claims 14 to 19, **characterised in that** the connection bores (68) in the foot of the steel-made tower segment (60) are arranged in a flange (62), which radially projects towards the inside from a wall (64) of the steel-made tower segment (60).

21. A method according to any one of claims 14 to 20, **characterised in that** the tower portion (10) made of the concrete material has plural prestressing elements (72), which are prestressed in the first step in order to prestress the tower portion (10) made of the concrete material.

22. A method according to claim 21, **characterised in that** in the region of the head portion (18), the prestressing elements (72) are arranged offset in the radial direction with respect to the openings (30) in the head portion (18).

23. A method according to any one of claims 14 to 22, **characterised in that** the head portion (18) has a portion (20), projecting radially towards the inside from the interior side (14) of a wall (12) of the tower portion (10) made of the concrete material, and the openings (30) in the head portion (18) lead from an upper surface (22) of the head portion (18) towards a lower surface (26) of the projecting portion (20), and the anchor bolts (70) arc lead through the openings (30) in the second step.

24. A method according to claim 23, **characterised in that** the openings (30) in the head portion (18) are aligned vertical to the lower surface (26) of the projecting portion (20).

25. A method according to claim 23 or 24, **characterised in that** the prestressing elements (72) run through the portion (20) of the head portion (18) projecting radially towards the inside.

26. A method according to any one of claims 21 to 25, **characterised in that** in the first step, the prestressing elements (72) are fixed on the upper side (22) of the head portion (18) and in the region of the lower end of the tower portion (10) made from the concrete material.

## Revendications

1. Tour de centrale éolienne comprenant un segment de tour (10) constitué d'un matériau en béton et d'une section de tour (60) tubulaire en acier qui présente à sa base une pluralité de perçages d'assemblage (68) pour l'assemblage avec le segment de tour (10) en béton, **caractérisée en ce que** le segment de tour (10) en béton présente un segment de tête (18) comprenant une pluralité d'ouvertures (30), et une pluralité de boulons d'ancrage (70) est prévue, lesquels peuvent être fixés après l'achèvement du segment de tour (10) en béton respectivement dans ou contre un des perçages d'assemblage (68) à la base de la section de tour (60) en acier et une des ouvertures (30) dans le segment de tête (18).

2. Tour de centrale éolienne selon la revendication 1, **caractérisée en ce que** les boulons d'ancrage (70) peuvent être dirigés à travers une ouverture (30) respective du segment de tête (18) et peuvent être fixés sur une face de l'ouverture (30) opposée à la section de tour (60) en acier.

3. Tour de centrale éolienne selon les revendications 1 ou 2, **caractérisée en ce qu'**au moins une plaque d'ancrage (32) est disposée aux extrémités des ouvertures (30) dans le segment de tête (18) opposées à la section de tour (60) en acier.

4. Tour de centrale éolienne selon une des revendications 1 à 3, **caractérisée en ce que** les ouvertures (30) dans le segment de tête (18) présentent des gaines (28) qui sont scellées avec le matériau de béton.

5. Tour de centrale éolienne selon une des revendications 1 à 4, **caractérisée en ce qu'**une plaque de répartition de charge (34) est placée contre une face supérieure (22) du segment de tête (18).

6. Tour de centrale éolienne selon une des revendications 1 à 5, **caractérisée en ce que** les ouvertures (30) dans le segment de tête (18) sont cylindriques et s'étendent en direction de leurs extrémités opposées à la section de tour (60) en acier sur l'axe longitudinal (58) du segment de tour (10) en béton.

7. Tour de centrale éolienne selon une des revendications 1 à 6, **caractérisée en ce que** les perçages d'assemblage (68) sont disposés à la base de la section de tour (60) en acier dans une bride (62) qui ressort radialement vers l'intérieur d'une paroi (64) de la section de tour (60) en acier.

8. Tour de centrale éolienne selon une des revendications 1 à 7, **caractérisée en ce que** le segment de tour (10) en béton comprend plusieurs éléments de précontrainte (72) qui précontraignent le segment de tour (10) en béton.

9. Tour de centrale éolienne selon la revendication 8, **caractérisée en ce que** les éléments de précontrainte (72) dans la région du segment de tête (18) sont disposés déportés dans le sens radial par rapport aux ouvertures (30) dans le segment de tête (18).

10. Tour de centrale éolienne selon une des revendications 1 à 9, **caractérisée en ce que** le segment de tête (18) présente une partie (20) ressortant radialement vers l'intérieur de la face intérieure (14) d'une paroi (12) du segment de tour (10) en béton, et les ouvertures (30) dans le segment de tête (18) conduisent d'une surface supérieure (22) du segment de tête (18) à une surface inférieure (26) de la partie en saillie (20).

11. Tour de centrale éolienne selon la revendication 10, **caractérisée en ce que** les ouvertures (30) dans le segment de tête (18) sont orientées perpendiculairement à la surface inférieure (26) de la partie en saillie (20).

12. Tour de centrale éolienne selon les revendications 10 ou 11, **caractérisée en ce que** les éléments de précontrainte (72) s'étendent à travers la partie ressortant radialement vers l'intérieur (20) du segment de tête (18).

13. Tour de centrale éolienne selon une des revendications 8 à 12, **caractérisée en ce que** les éléments de précontrainte (72) sont fixés sur la face supérieure du segment de tête (18) et dans la zone de l'extrémité inférieure du segment de tour (10) en béton.

14. Procédé de construction d'une tour de centrale éolienne, comprenant un segment de tour (10) constitué d'un matériau en béton et d'une section de tour (60) tubulaire en acier qui présente à sa base une pluralité de perçages d'assemblage (68) pour l'assemblage avec le segment de tour (18) en béton, **caractérisé en ce que** le segment de tour (10) en béton qui présente un segment de tête (18) ayant une pluralité d'ouvertures (30), est achevé dans une première étape, et dans une seconde étape la section de tour (60) en acier est reliée au segment de tour (10) en béton, une pluralité de boulons d'ancrage (70) étant prévue, lesquels sont fixés respectivement dans ou contre un des perçages d'assemblage (68) à la base de la section de tour (60) en acier et une des ouvertures (30) dans le segment de tête.

15. Procédé selon la revendication 14, **caractérisé en ce que** les boulons d'ancrage (70) dans la seconde étape sont dirigés à travers une ouverture respective (30) dans le segment de tête (18) et sont fixés sur une face de l'ouverture (30) opposée à la section de tour (60).

16. Procédé selon la revendication 15, **caractérisé en ce qu'**au moins une plaque d'ancrage (32) est disposée aux extrémités des ouvertures (30) dans le segment de tête (18) opposées à la section de tour (60) en acier, et les boulons d'ancrage (70) dans la seconde étape sont fixés dans ou contre la plaque d'ancrage (32).

17. Procédé selon une des revendications 14 à 16, **caractérisé en ce que** dans la première étape des gaines (28) qui forment les ouvertures (30) dans le segment de tête sont scellées avec le matériau de béton.

18. Procédé selon une des revendications 14 à 17, **caractérisé en ce qu'**une plaque de répartition de charge (34) est placée contre la face supérieure (22) du segment de tête (18).

19. Procédé selon une des revendications 14 à 18, **caractérisé en ce que** les ouvertures (30) dans le segment de tête (18) sont cylindriques et s'étendent en direction de leurs extrémités opposées à la section de tour (60) en acier sur l'axe longitudinal (58) du segment de tour (10) en béton.

20. Procédé selon une des revendications 14 à 19, **caractérisé en ce que** les perçages d'assemblage (68) sont disposés à la base de la section de tour (60) en acier dans une bride (62) qui ressort radialement vers l'intérieur d'une paroi (64) de la section de tour (60) en acier.

21. Procédé selon une des revendications 14 à 20, **caractérisé en ce que** le segment de tour (10) en béton comprend plusieurs éléments de précontrainte (72) qui sont serrés dans la première étape pour précontraindre le segment de tour (10) en béton.

22. Procédé selon la revendication 21, **caractérisé en ce que** les éléments de précontrainte (72) dans la région du segment de tête (18) sont disposés déportés dans le sens radial par rapport aux ouvertures (30) dans le segment de tête (18).

23. Procédé selon une des revendications 14 à 22, **caractérisé en ce que** le segment de tête (18) présente une partie (20) ressortant radialement vers l'intérieur de la face intérieure (14) d'une paroi (12) du segment de tour (10) en béton, et les ouvertures (30) dans le segment de tête (18) conduisent d'une surface supérieure (22) du segment de tête (18) à une surface inférieure (26) de la partie en saillie (20), et les boulons d'ancrage (70) dans la seconde étape sont dirigés à travers les ouvertures (30).

24. Procédé selon la revendication 23, **caractérisé en ce que** les ouvertures (30) dans le segment de tête (18) sont orientées perpendiculairement à la surface inférieure (26) de la partie en saillie (20).

25. Procédé selon les revendications 23 ou 24, **caractérisé en ce que** les éléments de précontrainte (72) s'étendent à travers la partie ressortant radialement vers l'intérieur (20) du segment de tête (18).

26. Procédé selon une des revendications 21 à 25, **caractérisé en ce que** les éléments de précontrainte (72) dans la première étape sont fixés sur la face
supérieure (22) du segment de tête (18) et dans la zone de l'extrémité inférieure du segment de tour (10) en béton.
